# EUROPÄISCHE PATENTANMELDUNG

(11) **EP 1 767 387 A2**
(43) Veröffentlichungstag der Anmeldung: **28.03.2007**
(21) Anmeldenummer: 06019762.1
(22) Anmeldetag: 21.09.2006
(51) Int. Cl.: B60H 1/22, F02M 37/00

(54) **Vorrichtung zur Entnahme von Brennstoff für eine Kraftfahrzeugheizung**

(30) Priorität: 21.09.2005 DE 102005045110
(71) Anmelder: Webasto AG, 82131 Stockdorf (DE)
(72) Erfinder: Elm, Nils Dr., 82152 Krailling (DE)

(57) **Zusammenfassung**

Die Erfindung betrifft eine Vorrichtung zur Entnahme von Brennstoff für eine Kraftfahrzeugheizung (52) aus einem Fahrzeugtank (10), mit einem Brennstoffleitungsabschnitt (12), der dazu vorgesehen ist, in den Fahrzeugtank zu münden.

Erfindungsgemäß ist vorgesehen, dass der Brennstoffleitungsabschnitt (12, 14, 16) ein topfartiges Brennstoffreservoir (18) haltert.

Die Erfindung betrifft weiterhin einen Fahrzeugtank (10) und ein Verfahren zum Einbau einer Vorrichtung zur Entnahme von Brennstoff für eine Kraftfahrzeugheizung (52) aus einem Fahrzeugtank (10) in einen Fahrzeugtank (10).

## Beschreibung

Die Erfindung betrifft eine Vorrichtung zur Entnahme von Brennstoff für eine Kraftfahrzeugheizung aus einem Fahrzeugtank, mit einem Brennstoffleitungsabschnitt, der dazu vorgesehen ist, in den Fahrzeugtank zu münden. Weiterhin betrifft die Erfindung ein Verfahren zum Einbau einer Vorrichtung zur Entnahme von Brennstoff für eine Kraftfahrzeugheizung aus einem Fahrzeugtank in einen Fahrzeugtank. Darüber hinaus betrifft die Erfindung einen Fahrzeugtank mit einem Schwalltopf, aus dem Kraftstoff für einen Verbrennungsmotor entnommen werden kann.

Beim Stand der Technik wird der Brennstoff für mit Brennstoff betriebene Fahrzeugheizungen mit einem Rohr aus dem Fahrzeugtank entnommen. Der Brennstoff kann jedoch Blasen oder Schäume enthalten, was zu einem unsauberen Brennverhalten führt. Größere Blasen können sogar zum Erlöschen der Flamme führen, was eine störende Qualmentwicklung ergibt. Weiterhin kann, insbesondere bei einem niedrigen Füllstand des Fahrzeugstänks, der Brennstoff vom Entnahmerohr weg schwappen, so dass Luft angesaugt wird. Dies führt ebenfalls zu Störungen im Brennverhalten.

Es ist bereits bekannt, den Kraftstoff für den Verbrennungsmotor beispielsweise eines Personenkraftwagens aus einem so genannten Schwalltopf zu entnehmen. Derartige Schwalltöpfe sind am Boden des Fahrzeugstanks angeordnet oder ausgebildet und werden durch Überlaufen über die Oberkante, durch eine Öffnung mit Ventil im unteren Bereich des Schwalltopfs oder durch eine Pumpe befüllt. Der Schwalltopf bevorratet somit Kraftstoff, auch wenn der Kraftstoff im Fahrzeugtank hin und her schwappt. Dadurch wird gewährleistet, dass am Entnahmerohr für den Antriebsmotor des Kraftfahrzeugs bei allen Fahrsituationen Kraftstoff ansteht.

Die nahe liegende Lösung zur Vermeidung der oben erläuterten, im Zusammenhang mit brennstoffbetriebenen Kraftfahrzeugheizungen auftretenden Probleme, den Brennstoff für die Kraftfahrzeugheizung aus dem ohnehin vorhandenen Schwalltopf zu entnehmen, ist von Seiten der Fahrzeughersteller in vielen Fällen unerwünscht. Dies wird beispielsweise damit begründet, dass der Antriebsmotor des Kraftfahrzeugs in jedem Fall gestartet werden können soll, was beispielsweise dann nicht gewährleistet ist, wenn eine Standheizung den im Schwalltopf befindlichen Kraftstoff verbraucht hat. Zur Vermeidung dieses Problems wäre es weiterhin denkbar, den Kraftstofftank von vorneherein mit einem zweiten Schwalltopf auszustatten, der ausschließlich für die Versorgung der brennstoffbetriebenen Kraftfahrzeugheizung vorgesehen ist. Ein derartiger zweiter Schwalltopf ist jedoch in vielen Fällen nicht vorhanden und eine nachträgliche Befestigung eines Schwalltopfs am Boden des Fahrzeugtanks ist entweder gar nicht oder nur mit einem unverhältnismäßig hohen Aufwand möglich.

Der Erfindung liegt die Aufgabe zugrunde, die sichere Versorgung von brennstoffbetriebenen Kraftfahrzeugheizungen mit Brennstoff auch dann zu ermöglichen, wenn der Brennstoff nicht aus dem zur Versorgung des Antriebsmotors vorgesehenen Schwalltopf entnommen werden kann und am Boden des Fahrzeugtanks ursprünglich kein weiterer Schwalltopf vorgesehen ist.

Diese Aufgabe wird durch die Merkmale der unabhängigen Ansprüche gelöst.
Vorteilhafte Ausführungsformen und Weiterbildungen der Erfindung ergeben sich aus den abhängigen Ansprüchen.

Die erfindungsgemäße Vorrichtung zur Entnahme von Brennstoff für eine Kraftfahrzeugheizung baut auf dem gattungsgemäßen Stand der Technik dadurch auf, dass der Brennstoffleitungsabschnitt ein topfartiges Brennstoffreservoir haltert. Durch diese Lösung kann die sichere Brennstoffversorgung der Kraftfahrzeugheizung sichergestellt werden, ohne dass ein weiterer Schwalltopf am Boden des Fahrzeugtanks befestigt werden muss. Das Brennstoffreservoir kann im fertig montierten Zustand auf dem Boden des Fahrzeugstanks aufstehen oder in geringem Abstand über dem Boden des Fahrzeugtanks positioniert werden. Vorzugsweise wird das Brennstoffreservoir befüllt, indem Kraft- beziehungsweise Brennstoff über die Oberkante einläuft. Wenn der Brennstoff von außen von dem Brennstoffreservoir wegschwappt, bleibt das Brennstoffreservoir aufgrund seiner topfartigen Form dennoch weitestgehend befüllt und die Kraftfahrzeugheizung kann den Brennstoff aus dem Reservoir entnehmen. Das Volumen des Brennstoffreservoirs ist vorzugsweise so groß, dass es zumindest in den meisten Anwendungsfällen wieder befüllt wird, bevor es entleert ist.

Bei der erfindungsgemäßen Vorrichtung ist vorzugsweise vorgesehen, dass sie Mittel aufweist, die dazu vorgesehen sind, das topfartige Brennstoffreservoir in Richtung auf einen Tankboden zu vorzuspannen. Es ist klar, dass im Bereich des Tankbodens am ehesten Brennstoff zur Verfügung steht, so dass eine Positionierung des Brennstoffreservoirs in diesem Bereich besonders vorteilhaft ist. Darüber hinaus ändert sich der Abstand zwischen dem Tankboden und dem Tankdeckel unter anderem in Abhängigkeit vom Tankfüllstand, vom Druck im Tank und von der Temperatur. Diese Abstandsänderung kann beispielsweise zwei bis drei Zentimeter betragen, wobei eine derartige Abstandsänderung durch die Vorspannung des Brennstoffreservoirs insbesondere dann ausgeglichen werden sollte, wenn das Brennstoffreservoir über den Brennstoffleitungsabschnitt an dem Tankdeckel befestigt ist.

In diesem Zusammenhang kommen beispielsweise Lösungen in Betracht, bei denen vorgesehen ist, dass der Brennstoffleitungsabschnitt zumindest abschnittsweise elastisch federnd ausgebildet ist, um die Mittel zumindest teilweise zu bilden. Beispielsweise kann der Brennstoffleitungsabschnitt durch ein entsprechend federndes Kunststoff- oder Metall-rohr gebildet sein, das schräg zum Tankboden angeordnet ist. Zusätzlich oder alternativ kann das topfartige Brennstoffreservoir ein Gewicht aufweisen, das die Positionierung des Brennstoffreservoirs zumindest unterstützt.

Weiterhin kann vorgesehen sein, dass die Mittel zumindest eine Feder umfassen. Eine derartige Feder kann sich beispielsweise an dem topfartigen Brennstoffreservoir abstützen, um dieses in Richtung auf den Tankboden zu vorzuspannen. Weiterhin ist es möglich, dass zwei gelenkig verbundene Abschnitte des Brennstoffleitungsabschnitts durch eine Feder so gegeneinander vorgespannt werden, dass ein Abschnitt im Bereich des Tankbodens positioniert wird.

Gemäß einer bevorzugten Weiterbildung der erfindungsgemäßen Vorrichtung ist vorgesehen, dass zur Halterung des topfartigen Brennstoffreservoirs ein Halter vorgesehen ist, der eine Relativbewegung zwischen dem Brennstoffleitungsabschnitt und dem topfartigen Brennstoffreservoir ermöglicht. Zu diesem Zweck kann der Halter entweder an dem Brennstoffleitungsabschnitt oder an dem Brennstoffreservoir fest befestigt und an der jeweils anderen Komponente verschiebbar gelagert sein.

Weiterhin wird für die erfindungsgemäße Vorrichtung bevorzugt, dass ein freier Endabschnitt des Brennstoffleitungsabschnitts in den Bereich des Bodens des topfartigen Reservoirs mündet. Dabei kann sich der freie Endabschnitt entweder durch die obere Öffnung des topfartigen Brennstoffreservoirs erstrecken oder durch einen in der Seitenwand des Brennstoffreservoirs vorgesehenen Durchbruch geführt sein. Da Blasen und Schäume in dem Brennstoffreservoir aufsteigen, gewährleistet eine Brennstoffentnahme im Bereich des Bodens des Brennstoffreservoirs, dass der Kraftfahrzeugheizung zumindest weitgehend schaum- und blasenfreier Brennstoff zugeführt wird.

In diesem Zusammenhang ist es beispielsweise möglich, dass der freie Endabschnitt des Brennstoffleitungsabschnitts durch einen flexiblen Schlauch gebildet ist. Diese Lösung wird insbesondere als vorteilhaft erachtet, wenn das topfartige Brennstoffreservoir relativ zu dem Brennstoffleitungsabschnitt beweglich ist, da die Flexibilität des Schlauches bei einer entsprechenden Schlauchlänge die sich ergebenden Abstandsänderungen problemlos ausgleichen kann.

Weiterhin wird bevorzugt, dass der Brennstoffleitungsabschnitt zumindest abschnittsweise durch ein Rohr gebildet ist. Wie erwähnt, kann es sich bei einem derartigen Rohr insbesondere um ein Kunststoff- oder Metallrohr handeln.

Eine besonders bevorzugte Weiterbildung der Erfindungsgemäßen Vorrichtung sieht vor, dass der Brennstoffleitungsabschnitt einen ersten Abschnitt, einen zweiten Abschnitt und einen dritten Abschnitt aufweist, wobei der erste Abschnitt mit dem zweiten Abschnitt einen Winkel ungleich 180° einschließt und zu dem dritten Abschnitt im Wesentlichen parallel verläuft. Eine derartige Auslegung ist insbesondere vorteilhaft, wenn das topfartige Brennstoffreservoir in seiner endgültigen Position neben dem Schwalltopf zu liegen kommen soll und der Brennstoffleitungsabschnitt im Bereich einer Schwalltopfarmatur befestigt wird.

Das erfindungsgemäße Verfahren zum Einbau einer Vorrichtung zur Entnahme von Brennstoff für eine Kraftfahrzeugheizung aus einem Fahrzeugtank in einen Fahrzeugtank umfasst die folgenden Schritte:
- Durchführen eines ein topfartiges Brennstoffreservoir halternden Brennstoffleitungsabschnitts durch eine Öffnung in einer Schwalltopfarmatur und
- Anordnen der Schwalltopfarmatur im Bereich eines Fahrzeugtankdurchbruchs.

Der Begriff Schwalltopfarmatur soll in diesem Zusammenhang die Komponente bezeichnen, die üblicherweise oberhalb des Schwalltopfs in der Tankdecke befestigt wird und Kraftstoffleitungen, elektrische Leitungen und gegebenenfalls weitere Komponenten durch die Tankdecke führt. Derartige Schwalltopfarmaturen sind in vielen Fällen bereits herstellerseitig mit einer leicht zu öffnenden Öffnung ausgestattet, durch die der Brennstoffleitungsabschnitt geführt werden kann. Falls eine derartige Öffnung herstellerseitig nicht vorgesehen wurde, ist es zumindest mit vertretbarem Aufwand möglich, eine derartige Öffnung nachträglich in der Schwalltopfarmatur vorzusehen.

Bei dem erfindungsgemäßen Verfahren ist vorzugsweise weiterhin vorgesehen, dass das topfartige Brennstoffreservoir in einem Bereich zwischen der Schwalltopfarmatur und einem mit dieser in Verbindung stehendem Schwalltopf angeordnet wird, bevor die Schwalltopfarmatur im Bereich des Fahrzeugtankdurchbruchs angeordnet wird. Diese Lösung ist insbesondere vorteilhaft, wenn der Schwalltopf über einen Verbindungsbereich mit der Schwalltopfarmatur in Verbindung steht und über diese befestigt wird. In einem derartigen Fall wird der Schwalltopf durch den Fahrzeugtankdurchbruch in den Fahrzeugtank eingebracht, wobei der Fahrzeugtankdurchbruch in vielen Fällen nur geringfügig größer ist als der Schwalltopf. Dabei ist beim Einführen des Schwalltopfs an dessen Seiten häufig nur sehr wenig Platz, weshalb es besonderes vorteilhaft ist, wenn sich die Vorrichtung zur Entnahme von Brennstoff für eine Kraftfahrzeugheizung beim Einführen ausschließlich oberhalb des Schwalltopfs befindet, d.h. nicht über dessen Umfang hinaussteht.

Insbesondere in diesem Zusammenhang kann das erfindungsgemäße Verfahren in vorteilhafter Weise dadurch weitergebildet sein, dass das topfartige Brennstoffreservoir in einem Bereich neben einem Schwalltopf angeordnet wird, nachdem die Schwalltopfarmatur im Bereich des Fahrzeugtankdurchbruchs angeordnet wurde. Die endgültige Lage des topfartigen Brennstoffreservoirs kann dabei insbesondere durch die Form des Brennstoffleitungsabschnitts vorgegeben werden.

Für das erfindungsgemäße Verfahren wird es weiterhin als vorteilhaft erachtet, dass ein federndes Element, das dazu vorgesehen ist, das topfartige Brennstoffreservoir in Richtung auf einen Fahrzeugtankboden zu vorzuspannen, während des Einbaus zumindest zeitweise vorgespannt wird, um den Bauraum der Vorrichtung zu verkleinern. Eine derartige Verkleinerung des Bauraums der Vorrichtung ist insbesondere dann vorteilhaft, wenn die Vorrichtung gleichzeitig mit dem Schwalltopf in den Fahrzeugtank eingebracht wird und der zwischen dem Schwalltopf und der Schwalltopfarmatur vorhandene Raum klein ist.

Der erfindungsgemäße Fahrzeugtank baut auf dem gattungsgemäßen Stand der Technik dadurch auf, dass benachbart zu dem Schwalltopf ein topfartiges Brennstoffreservoir angeordnet ist, das an einem Brennstoffleitungsabschnitt gehaltert ist, der mit einer Kraftfahrzeugheizung in Verbindung steht. Dadurch ergeben sich die Eigenschaften und Vorteile der erfindungsgemäßen Vorrichtung in gleicher oder ähnlicher Weise, weshalb zur Vermeidung von Wiederholungen auf die entsprechenden Ausführungen im Zusammenhang mit der erfindungsgemäßen Vorrichtung verwiesen wird.

Ein Grundgedanke der Erfindung besteht darin, ein topfartiges Brennstoffreservoir direkt an der Brennstoffleitung zu befestigen, bevor die Brennstoffleitung in den Fahrzeugtank eingeführt wird. Dadurch kann auf das aufwändige vorsehen eines weiteren Schwalltopfes am Boden des Fahrzeugtanks verzichtet werden.

Bevorzugte Ausführungsformen der Erfindung werden nachfolgend anhand der zugehörigen Zeichnungen beispielhaft erläutert.

Es zeigen:
- Figur 1: eine schematische Darstellung einer ersten Ausführungsform der erfindungsgemäßen Vorrichtung und des erfindungsgemäßen Fahrzeugtanks, wobei die Darstellung von Figur 1 insbesondere im Zusammenhang mit Figur 4 auch zur Erläuterung des erfindungsgemäßen Verfahrens geeignet ist;
- Figur 2: eine schematische Darstellung einer zweiten Ausführungsform der erfindungsgemäßen Vorrichtung und des erfindungsgemäßen Fahrzeugtanks;
- Figur 3: eine schematische Darstellung einer dritten Ausführung der erfindungsgemäßen vorrichtung und des erfindungsgemäßen Fahrzeugtanks und
- Figur 4: die erfindungsgemäße Vorrichtung von Figur 1 während der Durchführung des erfindungsgemäßen Verfahrens.

In den Zeichnungen bezeichnen gleiche oder ähnliche Bezugszeichen gleiche oder ähnliche Komponenten, die zur Vermeidung von Wiederholungen zumindest teilweise nur einmal erläutert werden.

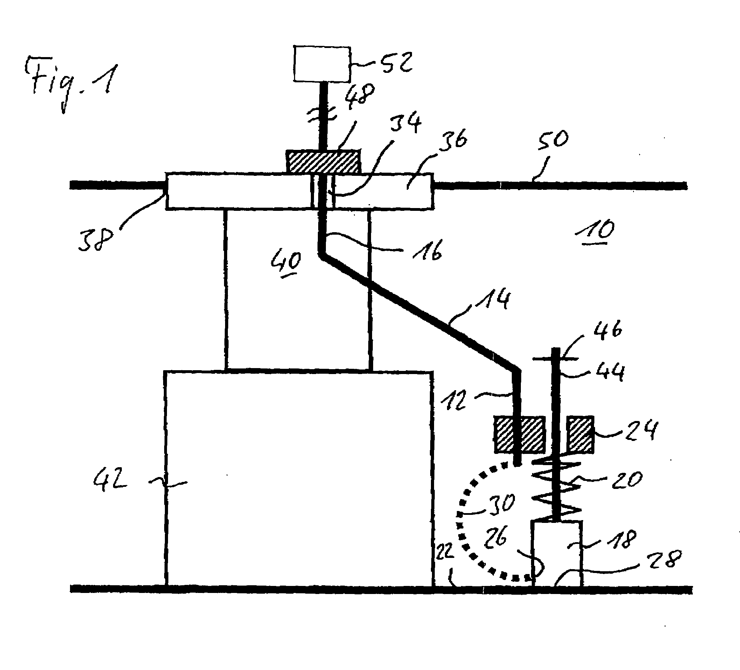

Gemäß der Darstellung von Figur 1 ist ein Schwalltopf 42 in einem Fahrzeugtank 10 angeordnet, wobei der Schwalltopf 42 dazu vorgesehen ist, den Antriebsmotor eines Kraftfahrzeugs auch dann sicher mit Kraftstoff zu versorgen, wenn der Kraftstoff im Fahrzeugtank 10 hin und her schwappt. Der Schwalltopf 10 ist über ein rohr- oder plattenförmiges Verbindungselement 40 mit einer Schwalltopfarmatur 36 verbunden. Kraftstoffleitungen, elektrische Leitungen und gegebenenfalls weitere Komponenten, die an dem Verbindungsbereich 40 befestigt und durch die Schwalltopfarmatur 36 geführt sind, sind der Einfachheit halber nicht dargestellt. Die Schwalltopfarmatur 36 weist eine Öffnung 34 auf, durch die sich ein dritter Abschnitt 16 eines Brennstoffleitungsabschnitts 12, 14, 16 erstreckt, an dem ein topfartiges Brennetoffreservoir 18 gehaltert ist. Dir Halterung des topfartigen Brennstoffreservoirs 18 erfolgt über einen Halter 24, der fest mit einem ersten Abschnitt 12 des Brennstoffleitungsabschnitts 12, 14, 16 verbunden ist. Ein Stab 44 erstreckt sich verschiebbar durch den Halter 24, wobei ein an dem Stab 44 vorgesehener Anschlag 46 verhindert, dass der Stab 44 sich vollständig von dem Halter 24 löst. Der Stab 44 ist fest mit dem topfartigen Brennstoffreservoir 18 verbunden, wobei eine Feder 20 das topfartige Brennstoffreservoir 18 in Richtung auf den Tankboden 22 zu vorspannt. Zu diesem Zweck stützt sich die Feder 20 sowohl an dem topfartigen Brennstoffreservoir 18 als auch an dem Halter 24 ab, wie dies dargestellt ist. Ein gestrichelt dargestellter flexibler Schlauch 30 steht mit dem Ende des ersten Abschnitts 12 des rohrförmigen Brennstoffleitungsabschnitts 12, 14, 16 in Verbindung, wobei sich der freie Endabschnitt 26 des Schlauchs 30 und damit des Brennstoffleitungsabschnitts 12, 14, 16 durch einen in der Seitenwand des topfartigen Brennstoffreservoirs 18 vorgesehenen Durchbruch im Bereich des Bodens 28 des topfartigen Reservoirs 18 erstreckt. Der erste Abschnitt 12 des Brennstoffleitungsabschnitts 12, 14, 16 schließt mit dessen zweiten Abschnitt 14 einen Winkel ungleich 180° ein und verläuft zum dritten Abschnitt des Brennstoffleitungsabschnitts 12, 14, 16 im Wesentlichen parallel. Auf diese Weise wird gewährleistet, dass das topfartige Brennstoffreservoir 18 neben dem Schwalltopf 42 zu liegen kommt. Da der dritte Abschnitt 16 des Brennstoffleitungsabschnitts 12, 14, 16 über Befestigungsmittel 48 (beispielsweise eine Mutter oder dergleichen) an der Schwalltopfarmatur 36 befestigt ist, gewährleistet die dargestellte Anordnung, dass sich das topfartige Brennstoffreservoir 18 auch dann im Bereich des Tankbodens 22 befindet, wenn sich der Abstand zwischen dem Tankboden 22 und dem Tankdeckel 50 beispielsweise fÜllstands-, druck- oder temperaturbedingt vergrößert.

Somit ist Figur 1 auch ein Fahrzeugtank zu entnehmen, bei dem benachbart zu einem Schwalltopf 42 ein topfartiges Brennstoffreservoir 18 angeordnet ist, dass an einem Brennstoffleitungsabschnitt 12, 14, 16 gehaltert ist, der mit einer Kraftfahrzeugheizung 52 in Verbindung steht.

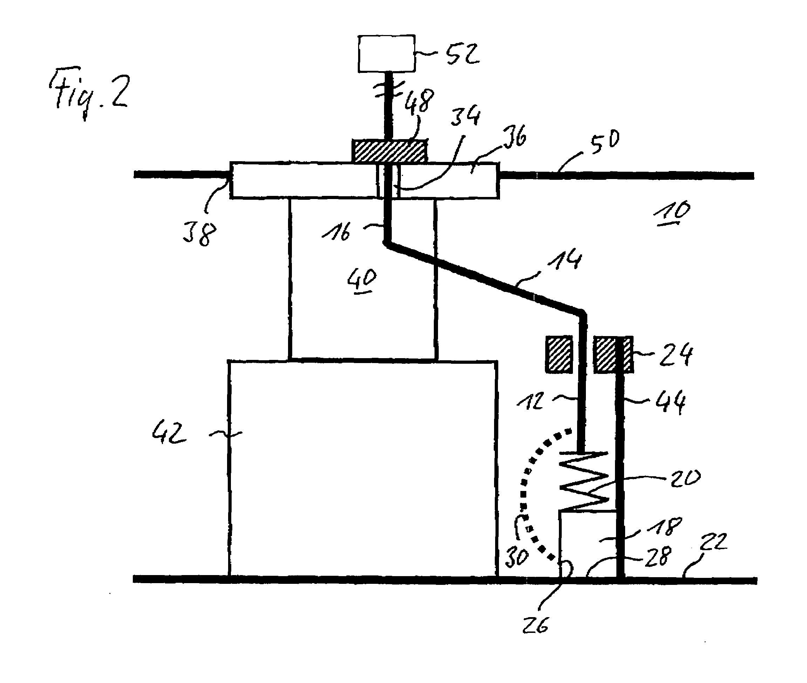

Die Ausführungsform von Figur 2 unterscheidet sich dadurch von der Ausführungsform gemäß Figur 1, dass der Halter 24 fest an einem mit dem topfartigen Brennstoffreservoir 18 verbundenen Stab 44 befestigt ist, während der Halter 24 auf dem ersten Abschnitt 12 des Brennstoffleitungsabschnitts 12, 14, 16 gleiten kann. Die zur Vorspannung des topfartigen Brennstoffreservoirs 18 vorgesehene Feder 20 stützt sich in diesem Fall an dem Brennstoffreservoir 18 und dem ersten Abschnitt 12 des Brennstoffleitungsabschnitts 12, 14, 16 ab. Eine derartige Auslegung des Halters 24 führt ebenfalls zu den anhand von Figur 1 beschriebenen Vorteilen.

Auch die Ausführungsform von Figur 2 zeigt einen Fahrzeugtank 10 mit einem Schwalltopf 42, aus dem Kraftstoff für einen Verbrennungsmotor entnommen werden kann, wobei benachbart zu dem Schwalltopf 42 ein topfartiges Brennstoffreservoir 18 angeordnet ist, das an einem Brennstoffleitungsabschnitt 12, 14, 16 gehaltert ist, der mit einer Kraftfahrzeugheizung 52 in Verbindung steht.

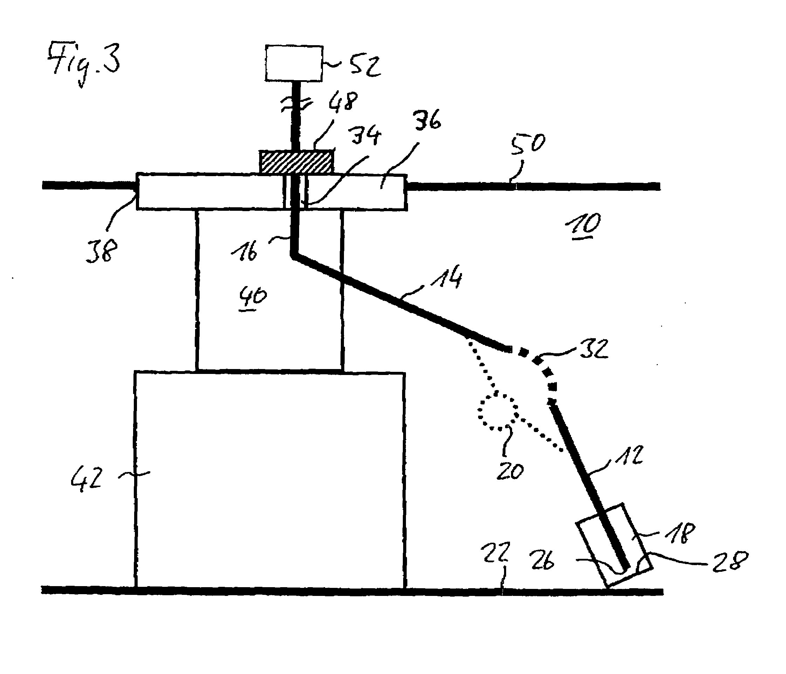

Bei der in Figur 3 dargestellten Ausführungsform ist zwischen dem ersten Abschnitt 12 und dem zweiten Abschnitt 14 des Brennstoffleitungsabschnitts 12, 14, 16 ein durch einen (gestrichelt dargestellten) flexiblen Schlauch gebildetes Gelenk 32 vorgesehen, wobei eine Feder 20 derart an dem ersten Abschnitt 12 und an dem zweiten Abschnitt 14 angreift, das das topfartige Brennstoffreservoir 18 in Richtung auf den Tankboden 22 zu vorgespannt wird. Bei der in Figur 3 dargestellten Ausführungsform erstreckt sich der erste Abschnitt 12 des Brennstoffleitungsabschnitts 12, 14, 16 direkt in das topfartige Brennstoffreservoir hinein, derart, dass das freie Ende 26 des ersten Abschnitts 12 sich im Bereich des Bodens 28 des Brennstoffreservoirs 18 befindet. Zu diesem Zweck ist der erste Abschnitt 12 vorzugsweise fest mit dem Brennstoffreservoir 18 verbunden.

Somit zeigt auch Figur 3 einen Fahrzeugtank 10, mit einem Schwalltopf 42, aus dem Kraftstoff für einen Verbrennungsmotor entnommen werden kann, wobei benachbart zu dem Schwalltopf 42 wieder ein topfartiges Brennstoffreservoir 18 angeordnet ist, das an einem Brennstoffleitungsabschnitt 12, 14, 16 gehaltert ist, der mit einer Kraftfahrzeugheizung 52 in Verbindung steht.

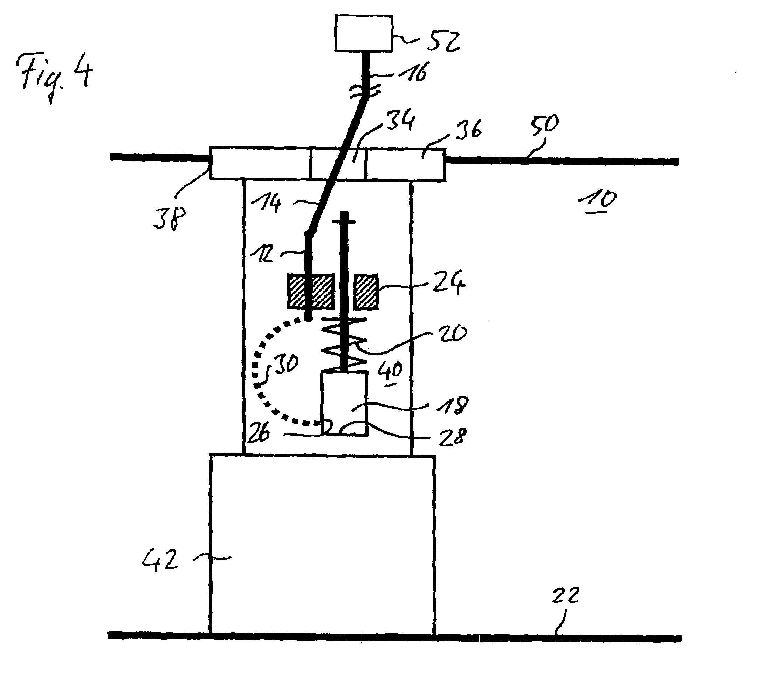

Figur 4 zeigt die erfindungsgemäße Vorrichtung von Figur 1 während der Durchführung des erfindungsgemäßen Verfahrens. Eine Ausführungsform des erfindungsgemäßen Verfahrens wird nachfolgend anhand der Figuren 1 und 4 erläutert. Gemäß der Darstellung von Figur 4 wurde ein ein topfartiges Brennstoffreservoir 18 haltender Brennstoffleitungsabschnitt 12, 14, 16 teilweise durch eine Öffnung 34 in einer Schwalltopfarmatur 36 geführt. Gemäß der Darstellung von Figur 4 befindet sich das topfartige Brennstoffreservoir 18 in einem Bereich 40 zwischen der Schwalltoparmatur 36 und einem mit dieser in Verbindung stehendem Schwalltopf 42. Diese Stellung wurde bereits hervorgerufen, bevor die Schwalltopfarmatur 36 im Bereich des Fahrzeugstankdurchbruchs 38 angeordnet wurde, wie dies dargestellt ist. Die Feder 20, die dazu vorgesehen ist, das topfartige Brennstoffreservoir 18 in Richtung auf einen Fahrzeugtankboden 22 zu vorzuspannen, wenn das Brennstoffreservoir 18 seine endgültige Lage erreicht hat, ist während der in Figur 4 dargestellten Einbauphase vorgespannt, damit die Vorrichtung zur Entnahme von Brennstoff zwischen dem Schwalltopf 42 und der Schwalltopfarmatur 36 Platz findet. Dadurch ist es möglich, den Schwalltopf durch die Öffnung 38 im Tank 10 zu führen, indem die Schwalltopfarmatur 36 entsprechend gehandhabt wird, ohne dass eine Behinderung durch das Brennstoffreservoir 18 erfolgt.

Figur 1 zeigt die endgültige Position des Brennstoffreservoirs 18, nachdem der Brennstoffleitungsabschnitt 12, 14, 16 unter Drehung und Neigung weiter in den Tank 10 hinein geschoben und durch Befestigungsmittel 48 an der Schwalltopfarmatur 36 arretiert wurde. In dieser Lage befindet sich das topfartige Brennstoffreservoir 18 neben dem Schwalltopf 42, wobei das Brennstoffreservoir 18 in der erläuterten Weise in Richtung auf den Tankboden 22 zu vorgespannt wird.

Für alle Ausführungsformen der Erfindung gilt, dass der Brennstoff vorzugsweise am Boden 28 des topfartigen Brennstoffreservoirs 18 entnommen wird. Da Blasen oder Schaum im Brennstoff aufgrund der Schwerkraft aufsteigen, liegt am Boden 28 des Brennstoffreservoirs 18 zumindest ein Blasenarmer Brennstoff vor, so dass eine saubere Verbrennung in der Fahrzeugheizung 52 sichergestellt werden kann.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Fahrzeugtank
- 12: erster Abschnitt des Brennstoffleitungsabschnitts
- 14: zweiter Abschnitt des Brennstoffleitungsabschnitts
- 16: dritter Abschnitt des Brennstoffleitungsabschnitts
- 18: töpfartiges Brennstoffreservoir
- 20: Mittel/Feder
- 22: Tankboden
- 24: Halter
- 26: Endabschnitt
- 28: Boden
- 30: Schlauch
- 32: Schlauch/Gelenk
- 34: Öffnung in der Schwalltopfarmatur
- 36: Schwalltopfarmatur
- 38: Fahrzeugstankdurchbruch
- 40: Verbindungselement
- 42: Schwalltopf
- 44: Stab
- 46: Anschlag
- 48: Befestigungsmittel
- 50: Tankdecke
- 52: Kraftfahrzeugheizung

## Patentansprüche

1. Vorrichtung zur Entnahme von Brennstoff für eine Kraftfahrzeugheizung (52) aus einem Fahrzeugtank (10), mit einem Brennstoffleitungsabschnitt (12), der dazu vorgesehen ist, in den Fahrzeugtank zu münden, **dadurch gekennzeichnet, dass** der Brennstoffleitungsabschnitt (12, 14, 16) ein topfartiges Brennstoffreservoir (18) haltert.

2. Vorrichtung nach Anspruch 1, **dadurch gekennzeichnet, dass** sie Mittel (20) aufweist, die dazu vorgesehen sind, das topfartige Brennstoffreservoir (18) in Richtung auf einen Tankboden (22) zu vorzuspannen.

3. Vorrichtung nach Anspruch 2, **dadurch gekennzeichnet, dass** der Brennstoffleitungsabschnitt (12, 14, 16) zumindest abschnittsweise elastisch federnd ausgebildet ist, um die Mittel zumindest teilweise zu bilden.

4. Vorrichtung nach Anspruch 2 oder 3, **dadurch gekennzeichnet, dass** die Mittel (20) zumindest eine Feder (20) umfassen.

5. Vorrichtung nach einem der vorhergehenden Ansprüche, **dadurch gekennzeichnet, dass** zur Halterung des topfartigen Brennstoffreservoirs (18) ein Halter (24) vorgesehen ist, der eine Relativbewegung zwischen dem Brennstoffleitungsabschnitt (12, 14, 16) und dem topfartigen Brennstoffreservoir (18) ermöglicht.

6. Vorrichtung nach einem der vorhergehenden Ansprüche, **dadurch gekennzeichnet, dass** ein freier Endabschnitt (26) des Brennstoffleitungsabschnitts (12, 14, 16) in den Bereich des Bodens (28) des topfartigen Reservoirs (18) mündet.

7. Vorrichtung nach einem der vorhergehenden Ansprüche, **dadurch gekennzeichnet, dass** der freie Endabschnitt (26) des Brennstoffleitungsabschnitts (12, 14, 16) durch einen flexiblen Schlauch (30) gebildet ist.

8. Vorrichtung nach einem der vorhergehenden Ansprüche, **dadurch gekennzeichnet, dass** der Brennstoffleitungsabschnitt (12, 14, 16) zumindest abschnittsweise durch ein Rohr gebildet ist.

9. Vorrichtung nach einem der vorhergehenden Ansprüche, **dadurch gekennzeichnet, dass** der Brennstoffleitungsabschnitt (12, 14, 16) einen ersten Abschnitt (12), einen zweiten Abschnitt (14) und einen dritten Abschnitt (16) aufweist, wobei der erste Abschnitt (12) mit dem zweiten Abschnitt (14) einen Winkel ungleich 180° einschließt und zu dem dritten Abschnitt (16) im Wesentlichen parallel verläuft.

10. Verfahren zum Einbau einer Vorrichtung zur Entnahme von Brennstoff für eine Kraftfahrzeugheizung (52) aus einem Fahrzeugtank (10) in einen Fahrzeugtank (10), insbesondere einer Vorrichtung nach einem der vorhergehenden Ansprüche, mit den folgenden Schritten:
- Durchführen eines ein topfartiges Brennstoffreservoir (18) halternden Brennstoffleitungsabschnitts (12, 14, 16) durch eine Öffnung (34) in einer Schwalltopfarmatur (36) und
- Anordnen der Schwalltopfarmatur (36) im Bereich eines Fahrzeugtankdurchbruchs (38).

11. Verfahren nach Anspruch 10, **dadurch gekennzeichnet, dass** das topfartige Brennstoffreservoir (18) in einem Bereich (40) zwischen der Schwalltopfarmatur (36) und einem mit dieser in Verbindung stehendem Schwalltopf (42) angeordnet wird, bevor die Schwalltopfarmatur (36) im Bereich des Fahrzeugtankdurchbruchs (38) angeordnet wird.

12. Verfahren nach Anspruch 10 oder 11, **dadurch gekennzeichnet, dass** das topfartige Brennstoffreservoir (18) in einem Bereich neben einem Schwalltopf (42) angeordnet wird, nachdem die Schwalltopfarmatur (36) im Bereich des Fahrzeugtankdurchbruchs (38) angeordnet wurde.

13. Verfahren nach einem der Ansprüche 10 bis 12, **dadurch gekennzeichnet, dass** ein federndes Element(20), das dazu vorgesehen ist, das topfartige Brennstoffreservoir (18) in Richtung auf einen Fahrzeugtankboden (22) zu vorzuspannen, während des Einbaus zumindest zeitweise vorgespannt wird, um den Bauraum der Vorrichtung zu verkleinern.

14. Fahrzeugtank (10) mit einem Schwalltopf (42), aus dem Kraftstoff für einen Verbrennungsmotor entnommen werden kann, **dadurch gekennzeichnet, dass** benachbart zu dem Schwalltopf (42) ein topfartiges Brennstoffreservoir (18) angeordnet ist, das an einem Brennstoffleitungsabschnitt (12, 14, 16) gehaltert ist, der mit einer Kraftfahrzeugheizung (52) in Verbindung steht.
